# EUROPEAN PATENT APPLICATION

(11) **EP 3 821 711 A1**
(43) Date of publication of application: **19.05.2021**
(21) Application number: 20206748.4
(22) Date of filing: 10.11.2020
(51) Int. Cl.: A22C 11/00

(54) **MACHINE FOR OPENING THE ENVELOPING LAYER OF STUFFED-MEAT PRODUCTS**

(30) Priority: 13.11.2019 IT 201900021036
(71) Applicant: Assenza, Alessandro, 48018 Faenza (RA) (IT)
(72) Inventor: Assenza, Alessandro, 48018 Faenza (RA) (IT)
(74) Representative: Modiano, Micaela Nadia

(57) **Abstract**

A machine (1) for opening the enveloping layer of stuffed-meat products (A), which comprises at least one pair of side-by-side seats (2), each constituted by a respective concave channel with a longitudinal extension, at least one pusher (3), arranged along a respective seat (2), for the translation of a stuffed-meat product along the seat (2), at least one grip element (4), shaped to clamp the terminal end of the enveloping layer that protrudes from the stuffed-meat product (A) and at least one cutting apparatus (5) for removing the terminal end and at least one cutting assembly (6) provided with at least one blade (7) which can move longitudinally along a respective seat (2) for the incision of a portion of the enveloping layer of a stuffed-meat product arranged within a corresponding seat (2), from which the terminal end has already been removed beforehand.

## Description

The present invention relates to a machine for opening the enveloping layer of stuffed-meat products, such as for example salami, sausages, mortadella, Vienna sausages and the like.

A peeling machine capable of removing the enveloping layer (the so-called "casing") from a particular stuffed-meat product after it has been prepared beforehand by assigned personnel is known from Italian Patent No. 102017000026625 in the name of the same Applicant.

The operations for preparing stuffed-meat products for subsequent sending to the peeling machine described in Italian patent no. 102017000026625 are complex and require skill on the part of the assigned personnel as well as considerable time.

In order to utilize optimally the potential of the peeling machine according to patent no. Italian 102017000026625, it becomes therefore necessary to have many workers who deal with the preparation operations, which consist in cutting (according to predefined criteria) the enveloping layer (casing) of the stuffed-meat products to be processed.

Obviously, resorting to a large workforce leads to a considerable increase of the overall costs of the process. These costs affect the finished product, to the full disadvantage of the end consumer.

Moreover, the specialized workforce for these activities (which are arduous) is increasingly difficult to find.

The aim of the present invention is to solve the problems described above, providing a machine for opening the enveloping layer of stuffed-meat products that is capable of working automatically with high productivity.

Within this aim, an object of the invention is to propose a machine for opening the enveloping layer of stuffed-meat products that can be coupled and integrated with the peeling machine according to Italian patent no. 102017000026625.

Another object of the invention is to propose a machine for opening the enveloping layer of stuffed-meat products that is particularly simple and therefore scarcely subject to failures and periodic maintenance.

A further object of the present invention is to provide a machine for opening the enveloping layer of stuffed-meat products that has low costs, is relatively simple to provide in practice and is safe in application.

This aim and these objects are achieved by a machine for opening the enveloping layer of stuffed-meat products, characterized in that it comprises
- at least one pair of side-by-side seats, each constituted by a respective concave channel with a longitudinal extension;
- at least one pusher, arranged along a respective seat, for the translation of a stuffed-meat product along said seat;
- at least one grip element, shaped to clamp the terminal end of the enveloping layer that protrudes from the stuffed-meat product and at least one cutting apparatus for removing said terminal end;
- at least one cutting assembly provided with at least one blade which can move longitudinally along a respective seat for the incision of a portion of said enveloping layer of a stuffed-meat product arranged within a corresponding seat, from which said terminal end has already been removed beforehand.

This aim and these objects are also achieved by means of a plant for processing stuffed-meat products, characterized in that it comprises
- a machine for opening the enveloping layer of stuffed-meat products, provided with at least one pair of side-by-side seats, each constituted by a respective concave channel with a longitudinal extension, at least one pusher, arranged along a respective seat, for the translation of a stuffed-meat product along said seat, at least one grip element shaped to clamp the terminal end of the enveloping layer that protrudes from the stuffed-meat product and at least one cutting apparatus for removing said terminal end and at least one cutting assembly provided with at least one blade which can move longitudinally along a respective seat for the incision of a portion of said enveloping layer of a stuffed-meat product arranged within a corresponding seat, from which said terminal end has already been cut off beforehand;
- a peeling apparatus provided with a drum provided with at least two peripheral receptacles for respective stuffed-meat products, each receptacle comprising at least one piston designed to entrain said stuffed-meat product that is present inside it and means for retaining flaps of said enveloping layer at one of its ends;
- a chute for the transfer of said stuffed-meat products from said machine to said apparatus which is interposed between them.

Further characteristics and advantages of the invention will become more apparent from the description of a preferred but not exclusive embodiment of the machine for opening the enveloping layer of stuffed-meat products according to the invention, illustrated by way of nonlimiting example in the accompanying drawings, wherein:

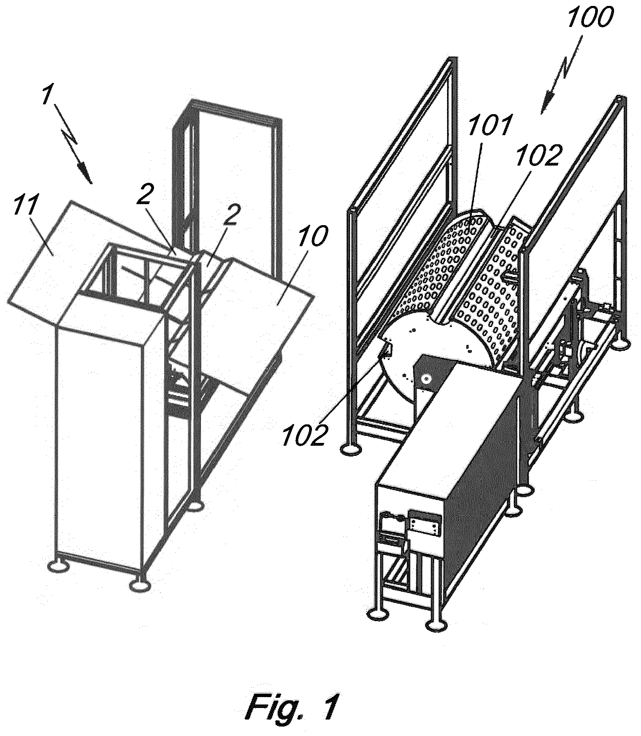

Figure 1 is a schematic perspective view of a machine for opening the enveloping layer of stuffed-meat products according to the invention and of a further apparatus for processing stuffed-meat products arranged on the side;

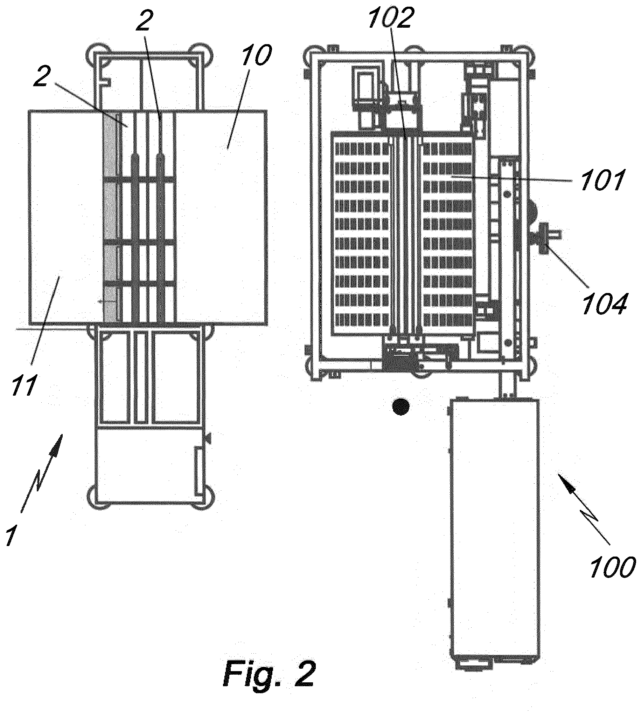

Figure 2 is a top view of the machine and of the apparatus of Figure 1 arranged side by side;

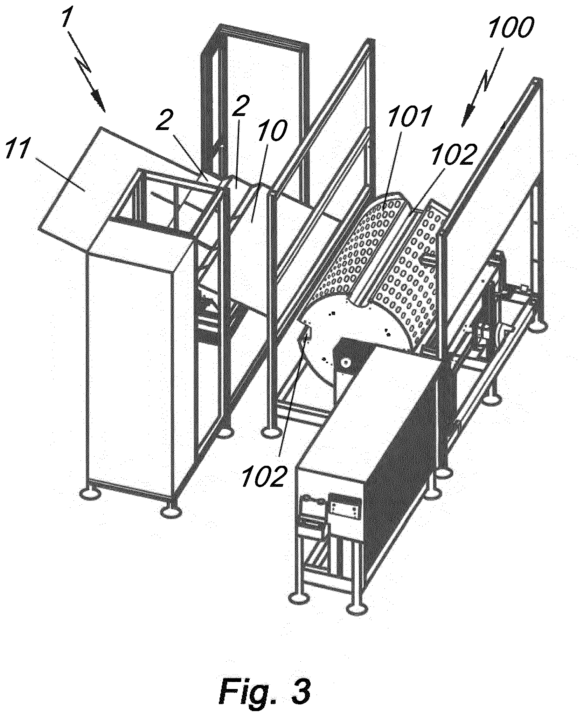

Figure 3 is a schematic view of the machine and of the apparatus of Figure 1, functionally coupled;

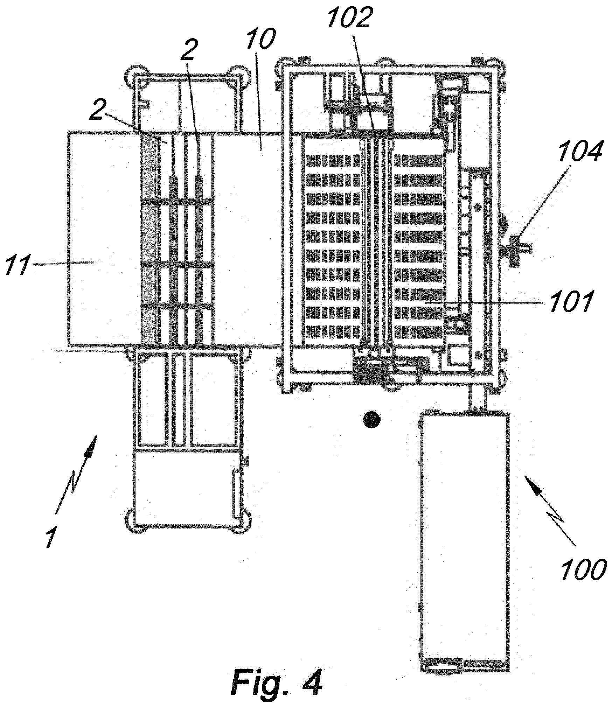

Figure 4 is a top view of the machine and of the apparatus of Figure 1, functionally coupled;

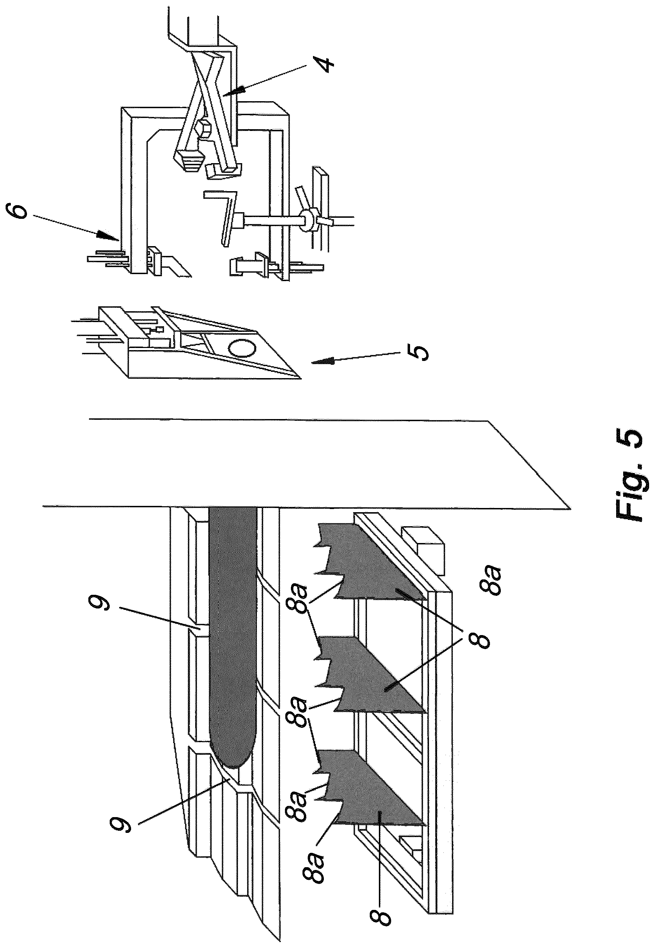

Figure 5 is a schematic perspective view of a portion of the machine for opening the enveloping layer of stuffed-meat products according to the invention;
Figure 6 is a schematic perspective view of a portion of the machine for opening the enveloping layer of stuffed-meat products according to the invention;
Figure 7 is a schematic perspective view of the portion of the machine of Figure 6 in a further configuration;

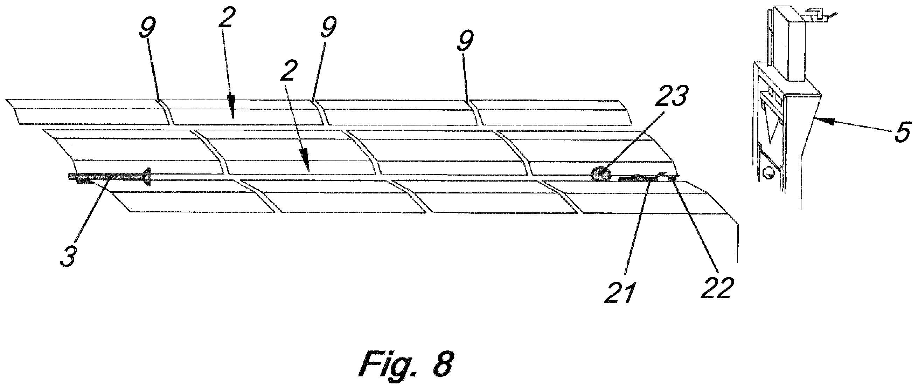

Figure 8 is a schematic perspective view of a part of the machine for opening the enveloping layer of stuffed-meat products according to the invention;

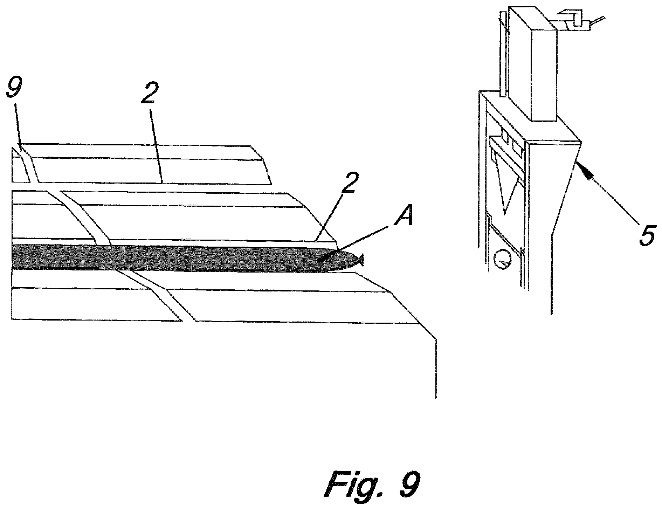

Figure 9 is an enlarged-scale schematic perspective view of the part of the machine shown in Figure 8;

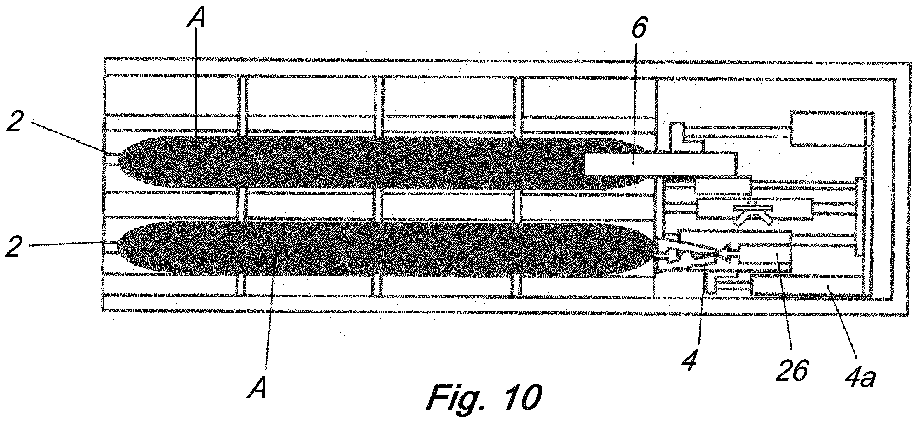

Figure 10 is a schematic top view of the machine according to the invention during use;

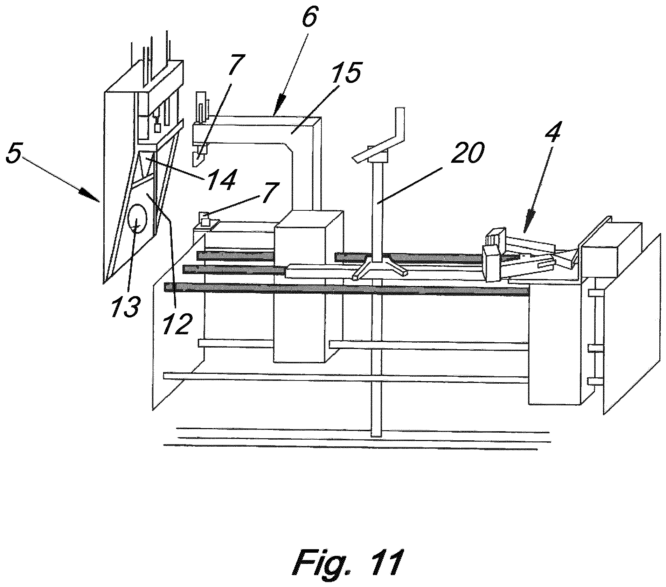

Figure 11 is a schematic perspective view of the machine according to the invention shown in Figure 10 during use;

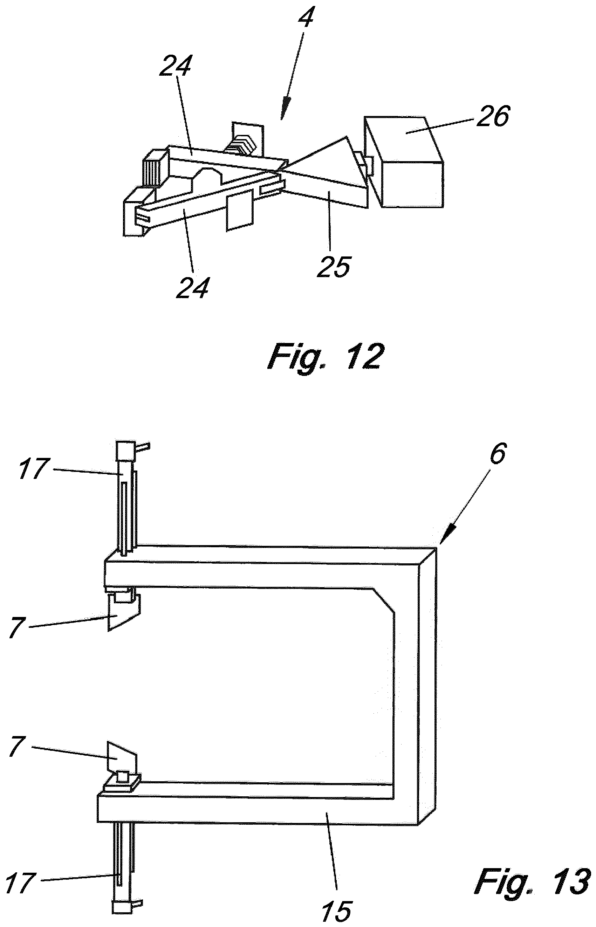

Figure 12 is an enlarged-scale schematic perspective view of a grip element of a machine according to the invention;
Figure 13 is an enlarged-scale schematic perspective view of a cutting apparatus of a machine according to the invention;

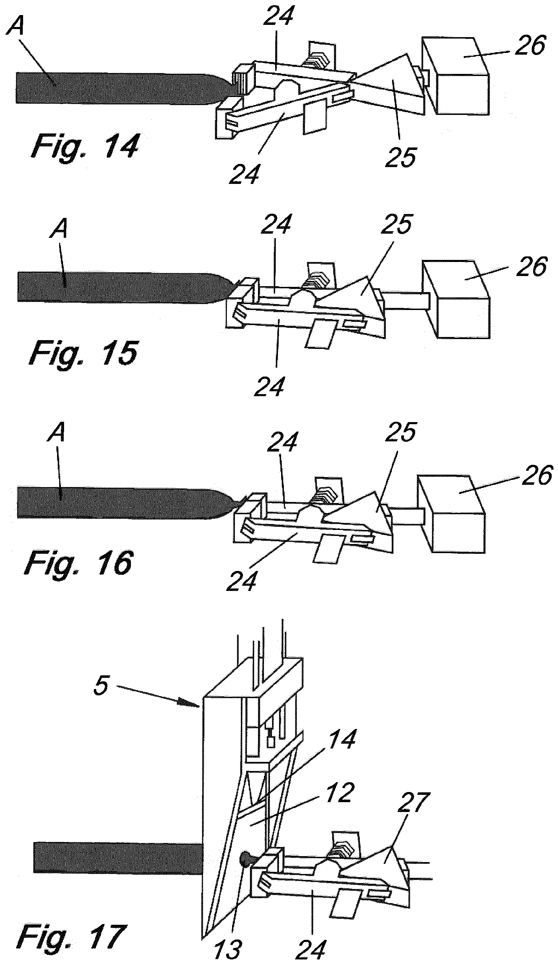

Figures 14, 15 and 16 are schematic perspective views of the sequence of operation of the grip element of Figure 12;
Figure 17 is a schematic perspective view of a step of the operation of the cutting apparatus of Figure 13;

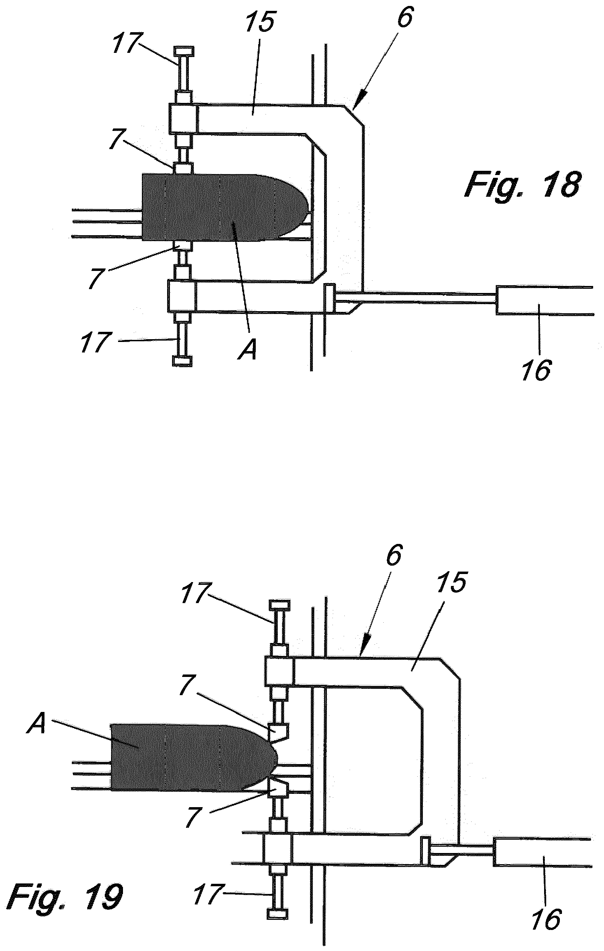

Figures 18 and 19 are schematic perspective views of the operating sequence of a cutting assembly of the machine according to the invention;

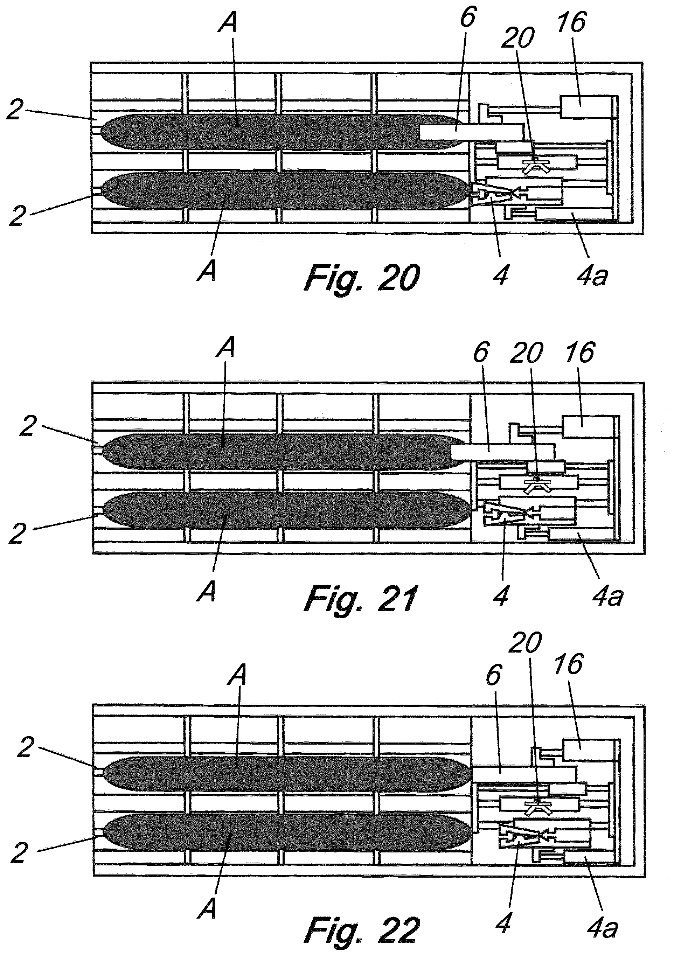

Figures 20, 21, and 22 are schematic top views of the sequence of operation of the cutting assembly of Figures 18 and 19;
Figure 23 is a schematic perspective view of an accessory for the machine according to the invention;
Figure 24 is a schematic perspective view of an accessory for a plant comprising the machine according to the invention;

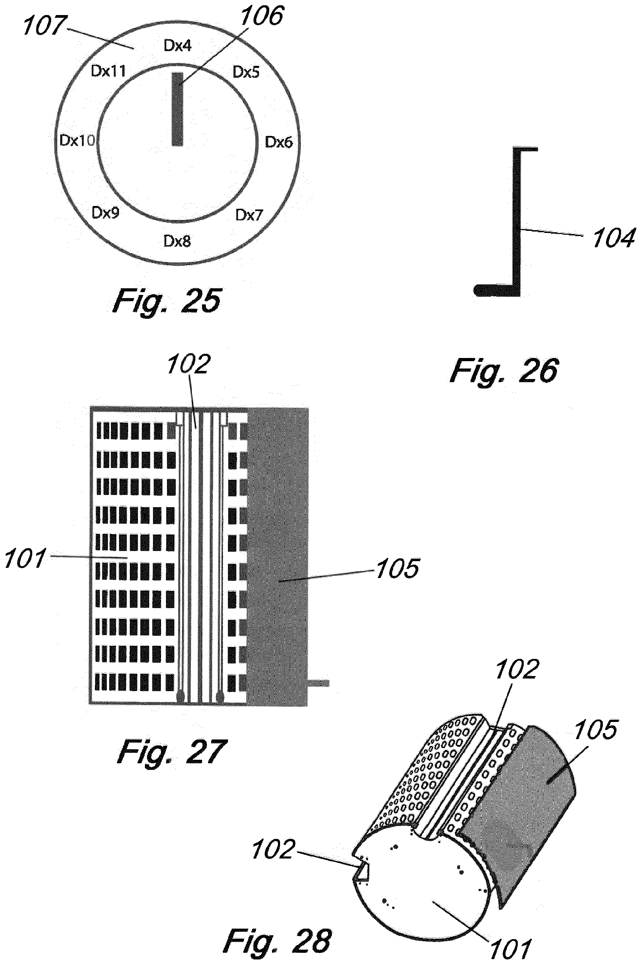

Figure 25 is a schematic perspective view of an accessory for a plant comprising the machine according to the invention;
Figure 26 is a schematic perspective view of an accessory for a plant comprising the machine according to the invention;
Figure 27 is a schematic perspective view of an accessory for a plant comprising the machine according to the invention;
Figure 28 is a schematic perspective view of an accessory for a plant comprising the machine according to the invention;

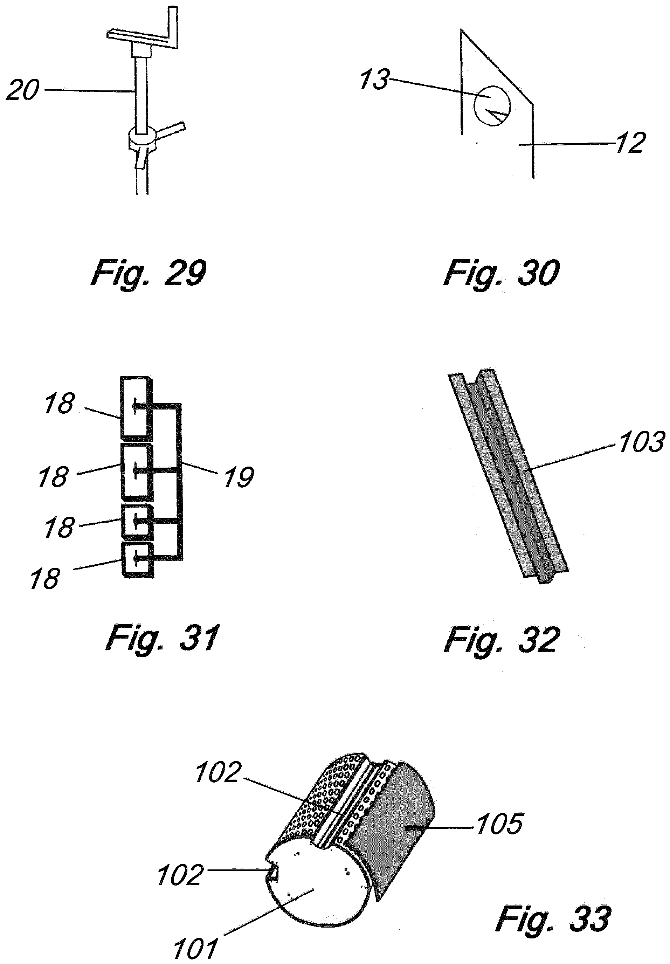

Figure 29 is a schematic perspective view of an accessory for the machine according to the invention;
Figure 30 is a schematic perspective view of an accessory for the machine according to the invention;
Figure 31 is a schematic perspective view of the accessory of Figure 23;
Figure 32 is a schematic perspective view of the accessory of Figure 24;
Figure 33 is a schematic perspective view of the accessory of Figure 28.

With particular reference to the figures, the reference numeral 1 generally designates a machine for opening the enveloping layer of stuffed-meat products A and the reference numeral 100 designates a peeling machine suitable for the complete removal of the enveloping layer.

The machine 1 for opening the enveloping layer of stuffed-meat products A comprises at least one pair of side-by-side seats 2, each constituted by a respective concave channel with a longitudinal extension.

The dimensions of each channel (which constitutes a respective seat 2) are suitable for the accommodation of at least one stuffed-meat product A of predefined size.

The choice to adopt V-shaped channels is particularly interesting since it makes it possible to manage in a stable manner stuffed-meat products A of various sizes and even with irregular shapes.

Furthermore, the machine 1 comprises at least one pusher 3, arranged along a respective seat 2, for the translation of a stuffed-meat product A along said seat 2.

Furthermore, there is advantageously a grip element 4 that is shaped to clamp the terminal end of the enveloping layer that protrudes from the stuffed-meat product A and at least one cutting apparatus 5 for the removal of said terminal end.

The machine 1 further comprises at least one cutting assembly 6 which is provided with at least one blade 7 which can move longitudinally along a respective seat 2 for the incision of a portion of the enveloping layer of a stuffed-meat product A arranged within the seat 2, the terminal end of the stuffed-meat product A having already been cut off beforehand.

The terminal end of the enveloping layer comprises a sort of terminal tuft in which the enveloping material is closed: said end can comprise closure elements, such as seals, ties, straps or even knots, stitched seams and the like.

With particular reference to a constructive solution that is of unquestionable interest in practice and in application, it is noted that the side-by-side seats 2 can advantageously be a plurality, each one shaped for the temporary accommodation of at least one stuffed-meat product A.

It is specified that the machine 1 according to the invention conveniently comprises elements 8 for the transfer of a stuffed-meat product A from a first seat 2 to at least one second seat 2.

Such seats 2, in order to ensure the correct operation of the transfer elements 8, comprise transverse slots 9 for the temporary accommodation of respective grip portions 8a (generally constituted by edges of the transfer element that are shaped so as to be able to abut effectively against a portion of the surface of the stuffed-meat product A and push it) of the transfer elements 8.

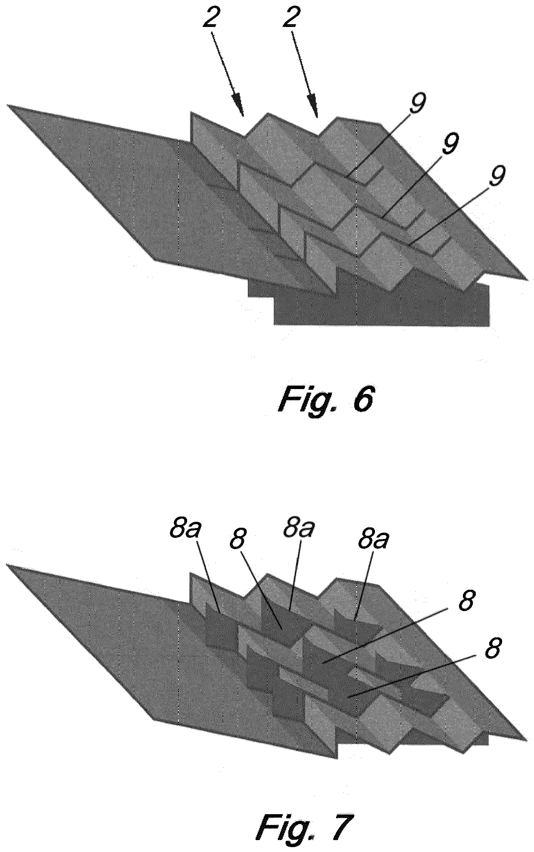

In practice, the grip portions 8a are movable between a first configuration of alignment with the first seat 2 (as shown by way of nonlimiting example in the accompanying Figure 6) and a second configuration of alignment with the second seat 2.

Figure 7 is a nonlimiting exemplifying view of the position assumed by the grip portions 8a in the transition between said first configuration and said second configuration.

It is specified that in order to integrate the machine 1 according to the invention in an industrial plant for the processing of stuffed-meat products, the machine 1 according to the invention comprises, laterally adjacent and proximate to at least one of the seats 2, a chute 10 for the transfer of a stuffed-meat product A, from which the terminal end has been removed and which is subjected to the incision of the portion of the enveloping layer, to additional apparatuses 100.

It is pointed out that it is also possible to adopt a feeding chute 11 (arranged opposite the chute 10) to supply the stuffed-meat products A to the first seat 2.

With particular reference to the constructive solution described in the preceding paragraphs, it is pointed out that the elements 8 for the transfer of a stuffed-meat product A from a first seat 2 to at least one second seat 2 may advantageously comprise grip portions 8a which can move between a first configuration of alignment with the first seat 2, a second configuration of alignment with the second seat 2, and a third configuration of alignment with the chute 10 for the expulsion of the stuffed-meat product A after the respective processing of the enveloping layer.

It is specified furthermore that the at least one pusher 3, arranged along a respective seat 2, may conveniently be a pneumatic cylinder.

The at least one grip element 4 may favorably comprise an automatic clamp for the clamping of the terminal end of the enveloping layer that protrudes from the stuffed-meat product A.

The at least one cutting apparatus 5 for removing the terminal end may validly comprise a mask 12 provided with a hole 13 for the temporary accommodation of the front of the stuffed-meat product, from which the terminal end of the enveloping layer clamped by the at least one grip element 4 protrudes, and a blade 14 which can slide on the mask 12, of the type of a guillotine, for cutting the end.

Numerous embodiments are provided: in particular, the mask 12 may provide for the sharpening of the edges of the hole 13, so as to utilize vertical movements of the mask 12 to cut the terminal end of the stuffed-meat product A (which, by abutting against the respective seat 2, cannot move during the cutting step).

Other embodiments which make it possible to cut the end of the stuffed-meat product A by virtue of the movement of a blade are not excluded.

Furthermore, it should be noted that the at least one cutting assembly 6 comprises a supporting frame 15 which is associated with the machine 1 by means of a pneumatic cylinder 16 and supports, on respective mutually opposite terminals, at least one respective movable blade 7.

This constructive solution is particularly optimized if a pneumatic cylinder 17 is usefully interposed between the terminals of the frame 15 and the respective at least one blade 7 in order to force the blade 7 onto the surface of the stuffed-meat product A, with consequent incision of the enveloping layer.

It is specified that solutions are provided to prevent the blades 7 from being able to produce a deep incision in the stuffed-meat product A, in order to ensure that their cutting action is located only on the enveloping layer.

For example, it is possible to provide blades 7 of the circular and rotatable type, interposed between shoulder discs or rollers, with respect to which the blade 7 protrudes by a predefined thickness, ensuring that the incision provided in the stuffed-meat product only penetrates up to this thickness.

The continuous action of the cylinders 17 (applied with a low pressure, i.e., unsuitable to generate deformations of the stuffed-meat product A being processed) ensures that the blades 7 follow the surface of the stuffed-meat product A (which is generally irregular) and also produce an incision in the tapered terminal part thereof.

It is specified that the best operating results of the machine 1 according to the invention can be observed when it is integrated in a plant for processing stuffed-meat products A which comprises, in addition to the machine 1, also a peeling apparatus 100 provided with a drum 101 that has at least two peripheral receptacles 102 for respective stuffed-meat products A. Each receptacle of the apparatus 100 advantageously comprises at least one piston designed to entrain the stuffed-meat product A that is present inside it and means for retaining flaps of the enveloping layer at one of its ends.

The chute 10 for the transfer of the stuffed-meat products from the machine 1 to the apparatus 100, interposed between them, ensures the automatic operation of the entire plant.

In a preferred but not exclusive embodiment, the semiautomatic plant for processing stuffed-meat products A is composed of two processing centers: the machine 1 according to the invention and the apparatus 100.

The entire plant is controlled by a control panel provided with a respective computer, by means of which it is possible to manage and supply all the electrical and pneumatic components and the like. A single start button is adopted and one or more safety switches of the mushroom type for emergency interruption of processing are installed.

The control panel is inside a cabinet shaped like a parallelepiped (with dimensions of 60 x 60 x 180 cm).

The machine 1 according to the invention is substantially divided into two distinct operating parts: a first part is the one in which the seats 2 are provided and is intended exclusively to accommodate and transfer the stuffed-meat products A; a second part (comprising the grip element 4, the cutting apparatus 5 and the cutting assembly 6) instead performs the operations for the opening and partial removal of the enveloping layer from the stuffed-meat product A.

The plane on which the seats 2 are provided is constituted by a modulated stainless steel plate on which they are present: said plate also constitutes the transfer chute 10 and the feeding chute 11.

In any case, it is not excluded to be able to provide these components by using distinct contiguous plates or other components that are structurally different but suitable to achieve the same purpose.

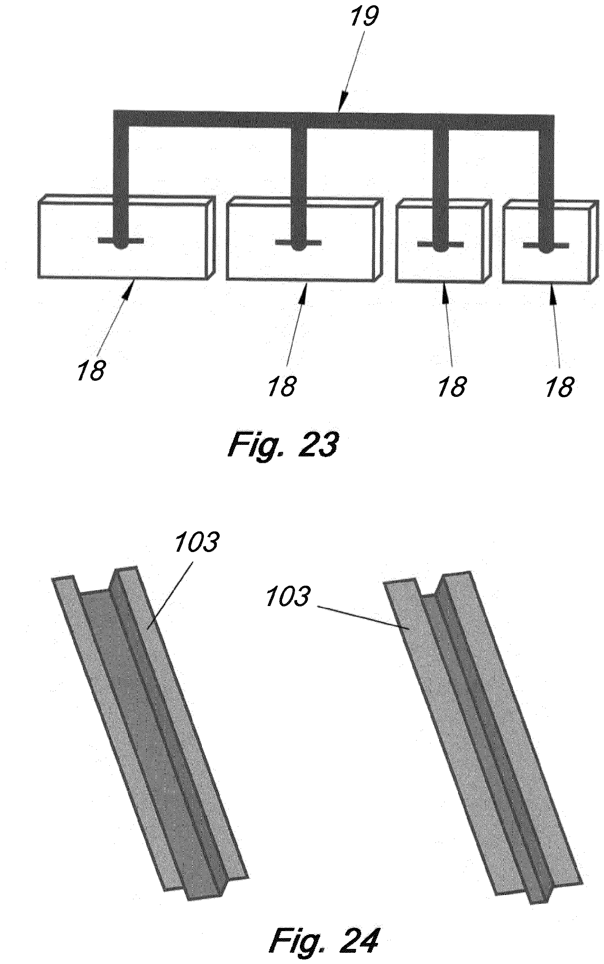

It is specified that it is possible to install in the seats 2 padding elements 18 in order to reduce their breadth and adapt them to different formats of stuffed-meat products A: one possible embodiment of these padding elements 18 is shown by way of nonlimiting example in Figure 23.

It is specified that padding elements 18 of different thicknesses are provided in order to adapt the seats 2 to various types of stuffed-meat products: in particular, the possibility to provide elements 18 with a thickness of 8 cm is provided (although it is not excluded to provide some with a greater thickness if it is necessary to process stuffed-meat products A with a very small diameter), which can be swapped with others that have a lower thickness (for example with a step of progressive reduction of the thickness of 1 cm per family of elements 18).

The various elements 18 of a same family having the same thickness are mutually associated by means of a grip handle 19 which makes it possible to move them as a group, facilitating their installation in the seat 2. It is specified that the handle 19 is easily removable.

The processing performed by the plant according to the invention provides for the automatic transfer, on a seat 2, of the stuffed-meat products A, one at a time, taken from an upstream magazine (optionally also provided manually by an operator), by means of the feeding chute 11.

In this step, the machine 1 pushes the stuffed-meat product A (by means of the pusher 3) toward the grip element 4, which can grip the end of the enveloping layer while the front of the stuffed-meat product A is inserted in the hole 13 of the mask 12. At this point it is possible to cut the terminal of the stuffed-meat product A by means of the blade 14 and to transfer it into the second seat 2 by virtue of the transfer elements 8.

At this point the blades 7 which are integral with the frame 15 advance along the stuffed-meat product for a predefined length (by way of indication, between 10 cm and 30 cm) following a translation of the frame that is imposed by the cylinder 16. Then the pneumatic cylinders 17 with which the blades 7 are associated are actuated so that they produce a superficial incision in the enveloping layer of the stuffed-meat product A. A retraction of the frame 15 (imposed by the pneumatic cylinder 16) produces the incision in the enveloping layer of the stuffed-meat product by the blades 7 along the entire terminal part of said stuffed-meat product A.

The pneumatic cylinders 17 continue for the entire incision operation to apply a predefined pressure to the blades 7, so as to follow correctly the irregular surface of the stuffed-meat product even in its tapered terminal region. The pressure applied by the cylinders 17 is low in order to avoid deformations of the stuffed-meat product A and the blades 7 comprise stroke limiting shoulders which prevent the execution of deep cuts in the stuffed-meat product A (the incisions affect only the enveloping layer and have, by way of example, a depth of approximately 1 mm).

The stuffed-meat product A is then transferred, by means of the chute 10, to the apparatus 100, which performs operations for the complete removal of the enveloping layer which are termed, in the jargon of the field, peeling. The apparatus 100 is fully described in patent no. 102017000026625 in the name of the same Applicant.

By means of height adjustment accessories 20 it is possible to provide a perfect alignment of the seats 2 with the grip element 4, the cutting apparatus 5 and the cutting assembly 6 as a function of the diameter of the stuffed-meat products A that one intends to process (by virtue, with particular reference to the constructive solution shown in the accompanying figures, of the height adjustment of the latter).

The accessory for adjusting the height of the seats 2 is constituted by a worm screw which is provided with levers which make it possible (when actuated in one direction or in the opposite direction) to find the perfect alignment with the diameter of the stuffed-meat products A on which one is to work.

The plane that comprises the seats 2, in a particular embodiment thereof, may be 150 cm wide and 180 cm deep.

The transfer elements 8 are constituted by contoured plates (in the examples shown merely by way of nonlimiting example in the accompanying figures, the laminas are 3) and are moved by two pistons, which are actuated and synchronized by the adapted software of the machine 1.

The loading surface, constituted by the seats 2 and by the chutes 10 and 11, is crossed by three transverse slots 9 through which the transfer elements 8 actuated by the pistons and coordinated by the general software of the machine can pass.

On the bottom of at least one seat 2 there is a lever 21 which, provided with an adapted sensor, by lowering with the weight of the stuffed-meat product A, activates the pusher 3, which forces the stuffed-meat product A against the mask 12, allowing the end of the enveloping layer (with the tuft, the clip and the tie, if present) to pass through the hole 13 that is present in order to be cut off by the blade 14.

Once the cutting of the end of the enveloping layer, controlled by an adapted sensor, is finished, the piston 22, located to the side of the lever 21, is activated and in turn activates a knurled linkage 23 which lifts the stuffed-meat product A by a few centimeters, making it at the same time retract with respect to the mask 12, furthermore freeing it from the hole 13.

A second refinement of considerable interest is constituted by the adoption of interchangeable masks 12, each provided with a respective hole 13 with a diameter that is complementary to the diameter of the stuffed-meat product A to be processed: in this manner, during processing, the stuffed-meat product is accommodated stably within the hole 13 (which, merely by way of example, may have a diameter that can vary between 2 or 3 cm up to even 6-10 cm). Through this hole 13, the ends of the enveloping layer of the stuffed-meat product A become accessible for the grip element 4. On the basis of the diameter of the batches of stuffed-meat products A to be processed, the operator, before starting the process, must identify the mask 12 that is suitable for the corresponding diameter and install it.

The machine 1 may be equipped with a predetermined number of masks 12 (for example 8 distinct masks 12, each provided with a hole 13 having a different diameter).

It is not excluded to provide on each mask 12 specific indications related to the dimensions of the stuffed-meat product A for which it is intended.

It is specified that the apparatus 100 also may be provided with a series of four stainless steel cradles 103 that correspond to the diameters of the stuffed-meat products A that one intends to process. The series of cradles 103 might be designated by the markings that correspond to the diameters of the corresponding stuffed-meat products A (they may vary by incremental dimensional steps of 1 cm, from a minimum of 6 cm to a maximum of 13 cm, although the possibility to also adopt different sizes is not excluded).

For adaptation, the operator must mount, in the four peripheral receptacles 102 of the drum 101, the corresponding cradles 103 of the stuffed-meat products A to be processed.

A further technical refinement of considerable importance that is present in the apparatus 100 of the plant according to the invention, intended to adapt the diameter of the stuffed-meat products A that one intends to process, is constituted by an adjustment crank 104 on which the operator can act manually (he operates by means of a worm screw) until an adapted protection shaped like a half cylinder 105 and made of stainless steel plate, which protects the drum 101 and prevents the exit of the stuffed-meat products A during peeling, is spaced. The movements of the protection 105 induced by the rotations of the crank 104 can be identified by means of an indicator 106 that is present on an interface dial 107 for the operator.

It has been found that all the format changing adjustments are quick and intuitive.

From a constructive standpoint, it is specified that the masks 12 might be constituted by steel plates with a width of 12 cm and a height of 18 cm, with a hole 13 having different diameters, from 3 to 6 cm, at the center.

The machine 1 according to the invention allows the separation by tearing of the end of the enveloping layer of the stuffed-meat product A (by means of a traction applied by the grip element 4) or the tensioning of the end of the enveloping layer of the stuffed-meat product A and the simultaneous guillotine cutting by means of the blade 14.

All the pneumatic actuators provided in the machine 1 (for example the cylinders 3, 16, 17 and all the other cited ones) are preferably actuated automatically, although it is not excluded to make it possible to operate the machine 1 with manual commands of the operator applied to a respective control panel.

The grip element 4 can be constituted by a pair of levers 24 which oscillate with respect to a pivoting point, on which the action of a wedge 25 moved by a pneumatic actuator 26 determines clamping.

In order to apply traction to the stuffed-meat product A, the entire grip element 4 is mounted on a fixture which is movable (by virtue of the action of a respective pneumatic actuator 4a) so that it can retract while it clamps the end of the enveloping layer.

The blade 14 can have a substantially flat, wedge-like or variously shaped configuration in order to optimize the quality of the cut.

The rule of motion of the frame 15, conveniently managed by a sensor, is slowed down when the blades 7 are aligned with the terminal part of the stuffed-meat product A (which is rounded and tapered) so that said blades, pushed by the two pistons 17, can follow slowly (providing the incision) said terminal portion as well, until they cross each other, for approximately one millimeter, producing an effect that is similar to the effect produced by the blades of scissors, cutting the enveloping layer completely into two flaps, reaching the part of the stuffed-meat product A that is not provided with a terminal enveloping end, which has already been torn and/or cut, in the preceding process (by means of the grip element 4 and the cutting apparatus 5). At the end of the incisions provided in the enveloping layer by the blades 7, the frame 15 reaches its inactive position.

By virtue of the advancement of the stuffed-meat products A obtained by means of the transfer elements 8, the operation of the machine 1 is continuous and therefore it can process in sequence an unspecified number of stuffed-meat products A.

Advantageously, the present invention solves the problems described above, proposing a machine 1 for opening the enveloping layer of stuffed-meat products A that is capable of operating automatically with high productivity.

Conveniently, the machine 1 according to the invention can be mated and integrated with the peeling machine according to Italian patent no. 102017000026625.

Usefully, the machine 1 according to the invention is particularly simple and therefore scarcely subject to failures and periodic maintenance.

Validly, the machine 1 according to the invention is relatively simple to provide in practice and low-cost: these characteristics make the machine 1 and the plant that comprises it innovations of assured application.

The invention thus conceived is susceptible of numerous modifications and variations, all of which are within the scope of the appended claims; all the details may furthermore be replaced with other technically equivalent elements.

In the exemplary embodiments shown, individual characteristics, given in relation to specific examples, may actually be interchanged with other different characteristics that exist in other exemplary embodiments.

In practice, the materials used, as well as the dimensions, may be any according to the requirements and the state of the art.

The disclosures in Italian Patent Application No. 102019000021036 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A machine for opening the enveloping layer of stuffed-meat products (A), **characterized in that** it comprises
- at least one pair of side-by-side seats (2), each constituted by a respective concave channel with a longitudinal extension;
- at least one pusher (3), arranged along a respective seat (2), for the translation of a stuffed-meat product along said seat (2);
- at least one grip element (4), shaped to clamp the terminal end of the enveloping layer that protrudes from the stuffed-meat product (A) and at least one cutting apparatus (5) for removing said terminal end;
- at least one cutting assembly (6) provided with at least one blade (7) which can move longitudinally along a respective seat (2) for the incision of a portion of said enveloping layer of a stuffed-meat product arranged within a corresponding seat (2), from which said terminal end has already been cut off beforehand.

2. The machine according to claim 1, **characterized in that** said side-by-side seats (2) are a plurality, each shaped for the temporary accommodation of at least one stuffed-meat product (A).

3. The machine according to claim 1, **characterized in that** it comprises elements (8) for the transfer of a stuffed-meat product from a first seat (2) to at least one second seat (2), said seats (2) comprising transverse slots (9) for the temporary accommodation of respective grip portions (8a) suitable to accommodate a portion of said stuffed-meat product (A), said grip portions (8a) being movable between a first configuration of alignment with said first seat (2) and a second configuration of alignment with said second seat (2).

4. The machine according to claim 1, **characterized in that** it comprises, arranged side by side and proximate to at least one of said seats (2), a chute (10) for the transfer of said stuffed-meat product (A), from which said terminal end has been removed and which is subjected to the incision in said portion of said enveloping layer, to additional apparatuses (100).

5. The machine according to claims 3 and 4, **characterized in that** said elements (8) for the transfer of a stuffed-meat product (A) from a first seat (2) to at least one second seat (2) comprise grip portions (8a) which can move between a first configuration of alignment with said first seat (2), a second configuration of alignment with the said second seat (2), and a third configuration of alignment with said chute (10), for the transfer of said stuffed-meat product (A) for the expulsion of said stuffed-meat product (A) after the respective processing of the enveloping layer.

6. The machine according to claim 1, **characterized in that** said at least one pusher (3), arranged along a respective seat (2), is a pneumatic cylinder.

7. The machine according to claim 1, **characterized in that** said at least one grip element (4) comprises an automatic clamp for the clamping of the terminal end of the enveloping layer that protrudes from the stuffed-meat product (A).

8. The machine according to claim 1, **characterized in that** said at least one cutting apparatus (5) for removing said terminal end comprises a mask (12) provided with a hole (13) for the temporary accommodation of the front of said stuffed-meat product (A), from which said terminal end of said enveloping layer clamped by said at least one grip element (4) protrudes, and a blade (14), which can slide on said mask (12), of the type of a guillotine for cutting said end.

9. The machine according to claim 1, **characterized in that** said at least one cutting assembly (6) comprises a supporting frame (15) which is associated with said machine (1) by means of a pneumatic cylinder and supports on respective mutually opposite terminals at least one respective movable blade (7).

10. The machine according to claim 9, **characterized in that** a pneumatic cylinder (17) is interposed between said terminals of said frame (15) and the respective at least one blade (7) in order to force said blade (7) onto the surface of said stuffed-meat product (A), with consequent incision of said enveloping layer.

11. A plant for processing stuffed-meat products, **characterized in that** it comprises
- a machine (1) for opening the enveloping layer of stuffed-meat products (A) which is provided with at least one pair of side-by-side seats (2), each constituted by a respective concave channel with a longitudinal extension, at least one pusher (3), arranged along a respective seat (2), for the translation of a stuffed-meat product along said seat (2), at least one grip element (4) shaped to clamp the terminal end of the enveloping layer that protrudes from the stuffed-meat product (A), at least one cutting apparatus (5) for removing said terminal end, and at least one cutting assembly (6) provided with at least one blade (7) which can move longitudinally along a respective seat (2) for the incision of a portion of said enveloping layer of a stuffed-meat product (A) arranged within a corresponding seat (2), from which said terminal end has already been previously cut off;
- a peeling apparatus (100) provided with a drum (101) provided with at least two peripheral receptacles (102) for respective stuffed-meat products (A), each receptacle comprising at least one piston designed to entrain said stuffed-meat product (A) that is present inside it and means for the retention of flaps of said enveloping layer at one of its ends;
- a chute (10) for the transfer of said stuffed-meat products (A) from said machine (1) to said apparatus (100) interposed between them.
